Europäisches Patentamt
European Patent Office
Office européen des brevets

(11) Publication number: 0 350 055 A2

(12) EUROPEAN PATENT APPLICATION

(21) Application number: 89112466.1

(51) Int. Cl.4: G06F 9/38

(22) Date of filing: 07.07.89

(30) Priority: 07.07.88 JP 167783/88

(43) Date of publication of application: 10.01.90 Bulletin 90/02

(84) Designated Contracting States: DE FR GB

(71) Applicant: KABUSHIKI KAISHA TOSHIBA
72, Horikawa-cho Saiwai-ku
Kawasaki-shi Kanagawa-ken 210(JP)

(72) Inventor: Kishigami, Hidechika
Matsukazeso 2 182, Iwasaki-cho
Hodogaya-ku Yokohama-shi(JP)

(74) Representative: Lehn, Werner, Dipl.-Ing. et al
Hoffmann, Eitle & Partner Patentanwälte
Arabellastrasse 4
D-8000 München 81(DE)

(54) **Information processing apparatus.**

(57) Output of a profetch request signal is so controlled as to adjust a capacity of an instruction buffer (1) for prefetching instructions and used in a computer for pipeline processing to an optimum capacity which is required corresponding to any given case. The optimum capacity is suitably set in a control resistor (7), and the decision whether the request signal be outputted or not is made in comparison with the empty state of resistors (1a-1d) in the instruction buffet (1).

FIG.2

IUSTRACTION BUFFER 1
GENERATING CIRCUIT 5
IFU
3
V3
V2
V1
V0
3d
3c
3b
3a
BUFFER RESISTOR IB 3
BUFFER RESISTOR IB 2
BUFFER RESISTOR IB 1
BUFFER RESISTOR IB 0
1d
1c
1b
1a
9d
9c
9b
9a
11c
11b
11a
13
PREFETCH REQUEST SIGNAL (IFU)
DUC
CONTROL RESISTOR 7

Xerox Copy Centre

EP 0 350 055 A2

# INFORMATION PROCESSING APPARATUS

## BACKGROUND OF THE INVENTION

### Field of the Invention

The present invention relates to an information processing apparatus characterized by having a mechanism able to change an apparent capacity of an instruction buffer for holding prefetched instructions temporally.

### Description of the Prior Art

Recently, a so-called pipeline processing method is adopted in order to achieve high performance and a high function in an information processing apparatus such as a microprocessor. Such an information processing apparatus using the pipeline processing method prefetches instructions. The prefetched instructions are held temporally in an instruction buffer equipped in the apparatus.

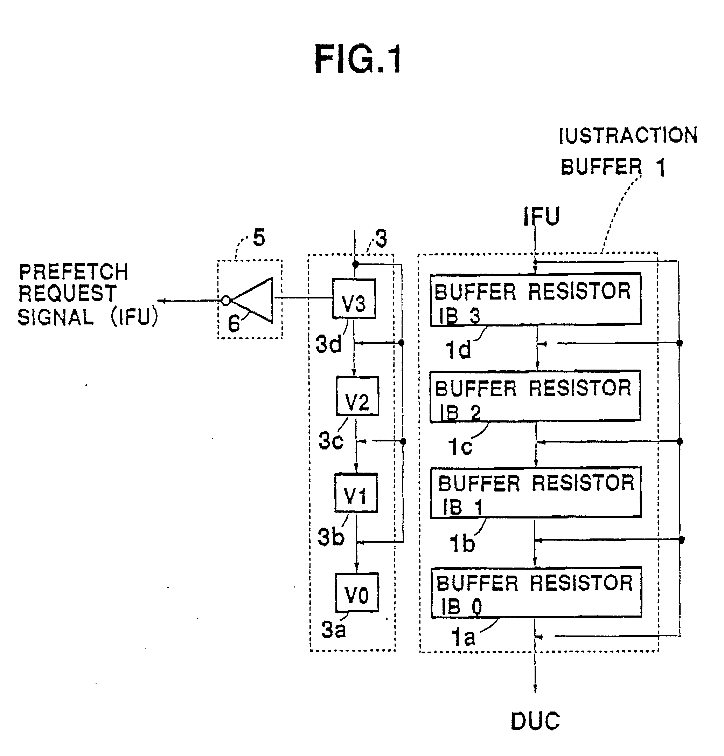

As the information processing apparatus equipped with such an instruction buffer, an apparatus having its main portion constructed as shown in Fig. 1 is known.

In Fig. 1, instructions prefetched by an instruction fetch unit (IFU, not shown) are given to an instruction buffer 1. The instruction buffer 1 is a buffer for temporally holding instructions which are given thereto, and is composed by a cascade connection of four buffer resistors (IB0 to IB3) 1a to 1d each of which has a capacity of four bytes. The instruction buffer 1 operates as an FIFO (First-In First-Out) in which data are outputted in the input order. Accordingly, the prefetched instructions are held in an empty buffer resistor of the buffer resistors, 1a to 1d, and then the held instructions are transferred into the buffer resistor is successively. That is, the prefetched instructions are held in order from the buffer resistor 1a. Accordingly, for example, when the prefetched instructions are held in the buffer resistor 1c, the other prefetched instructions have been already and sufficiently held in the buffer resistors 1a, 1b, and the buffer resistor 1d is still in the empty state. The instructions which are held in the buffer resistor 1a are given to a decode until (DCU, not shown) for decoding instructions from the buffer unit 1a.

In the instruction buffer 1, a group of flip-flops 3 (hereinafter abbreviated as "F/F") are provided. The group of F/F 3 are composed by a cascade connection of four F/F (V0 to V3), 3a to 3d, which respectively correspond to the buffer resistors, 1a to 1d. Each of the F/F, 3a to 3d, indicates if a content of each the corresponding buffer resistor, 1a to 1d is active/reactive. These F/F, 3a to 3d, indicate "1" when the content of the respectively corresponding buffer resistors are active, while indicate "0" when the content of the corresponding buffer resistors are reactive and in the empty state.

To the F/F 3a is connected a generation circuit 5 for generating a prefetch request signal for requesting prefetch to the IFU. The generation circuit 5 is composed of an inversion circuit 6 which inverts the value of the F/F 3a and generates a prefetch request signal for indicating the request at the "I" level. Accordingly, in this case, when the content of the buffer resistor 1d in the first step is reactive and the value of the F/F 3d is "0", the prefetch request signal becomes on the "I" level, and then the request for prefetch to the IFU is performed.

When the value of the ith ($i = 0 \sim 3$) F/F is "I" and the content of the buffer resistor corresponding to the ith F/F is active, the instruction buffer performs the FIFO operation, so that the value of the jth ($j<i$) F/F becomes "I" and the content of the buffer resistor corresponding to the jth F/F becomes active. Accordingly, the value of the F/F 3d becomes "0", and the request for prefetch is performed when the emptiness of 4 bytes or more is present in the instruction buffer 1. Therefore, the instruction buffer 1 can hold the instructions with always keeping it fixed capacity of 16 bytes.

In the instruction buffer 1 which holds the so-prefetched instructions, the prefetched and held instructions are usually cleared to be reactive when branch instructions are performed. Therefore, when a program consisting of many branch instructions is run in case that the capacity of the instruction buffer 1 is too large, a large amounts of instructions which possible become reactive prior to the run may be prefetched and held. By such prefetch, an occupation ratio of an external bus is increased and competition with fetch of operand data occurs. Thus, the performance is inconveniently lowered.

On the other hand when the capacity of the instruction buffer 1 is too small, instructions to be run in a running step in the pipeline processing can not be held sufficiently. That is, it is difficult to supply sufficient instructions to the running step under the condition. For this reason, the performance is also lowered.

Accordingly, in order to prevent the lowering of the performance, the capacity of the instruction buffer must be set for an optimum value corresponding to a program to be run.

However, in the conventional construction shown in Fig. 1, the instruction buffer 1 has a fixed capacity, and prefetches when a predetermined amount of the emptiness is present therein. That is, the instruction buffer 1 performs the instruction prefetch request so as to always hold instructions corresponding to the capacity thereof. Accordingly, the above-mentioned inconvenience can not be avoided in the conventional construction.

## SUMMARY OF THE INVENTION

The present invention is invented in the light of the above, and an object thereof is to provide an information processing apparatus which can change an apparent capacity of its instruction buffer for holding instructions to be prefetched so as to optimize an amount of the instructions to be prefetched and held for a program to be run.

In order to achieve the object, the present invention comprises holding means for temporally holding a plurality of prefetched instructions, state indicating means for indicating a holding state of the instructions of the holding means by indicating if the instructions held in the holding means are active/reactive, assigning means for assigning a capacity of the holding means which is able to hold instructions corresponding to a content of a program to be run, and requesting means for requesting instruction prefetch when an amount of active instructions held in the holding means an indicated by the state indicating means is less than the capacity assigned by the assigning means.

In the above construction, the present invention is intended to prefetch instructions when the amount of the active instructions which are prefetched and held is less than the assigned capacity of the holding means, so that the capacity of the holding means can be changed by suitably assigning the capacity of the holding means.

These and other objects, features and advantages of the present invention will be more apparent from the following description of a preferred embodiment, taken in conjunction with the accompanying drawings.

## BRIEF DESCRIPTION OF THE DRAWINGS

Fig. 1 is a view for explaining a construction of an information processing apparatus equipped with a conventional instruction buffer;

Fig. 2 is a view for explaining a main construction of an information processing apparatus related to an embodiment of the present invention; and

Fig. 3 is a view for explaining operation of the apparatus shown in Fig. 2.

## DETAILED DESCRIPTION OF THE PREFERRED EMBODIMENTS

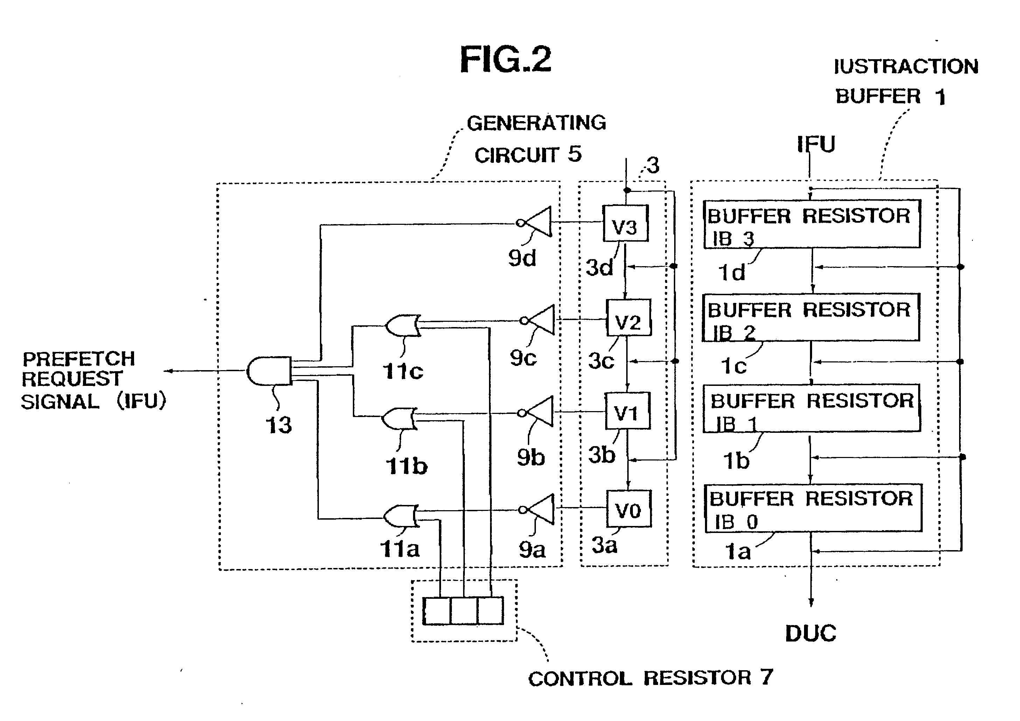

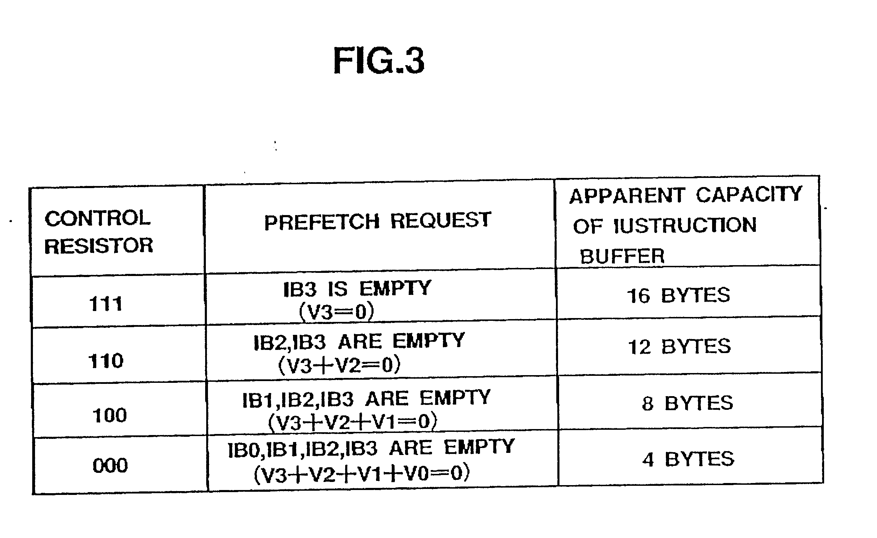

Fig. 2 is a view for showing a main construction of an information processing apparatus related to an embodiment of the present invention, and Fig. 3 is a view for explaining operation of the apparatus shown in Fig. 2. In the information processing apparatus shown in Fig.2, a prefetch request signal is generated so that an apparent capacity of an instruction buffer 1 can be changed by changing instruction prefetch algorithm. In Fig. 2, elements which are indicated by the same reference numerals as those shown in Fig. 1 have functions respectively corresponding thereto.

In Fig. 2, the information processing apparatus is equipped with a generating circuit 5 for generating a prefetch request signal by prefetch algorithm and being different from the generating circuit 5 shown in Fig. 1, and a control resistor 7 for assigning the prefetch algorithm in addition to the instruction buffer 1 and an F/F group 3.

The generating circuit 5 is composed of inversion gates, 9a to 9d, logical sum (OR) gates, 11a to 11c, and a logical product (AND) gate 13.

The inversion gates 9a to 9d, are provided corresponding to the F/F, 3a to 3d, and invert the values of the F/F, 3a to 3d, respectively corresponding thereto. Each of inverted output from the inversion gates, 9a to 9c, is given to one of the input of each of the OR gates, 11a to 11c, respectively corresponding thereto. Output of the inversion gate 9d is given to the input of the AND gate 13.

The OR gates, 11a to 11c, are connected to the control resistor 7 at each the other input thereof, and each of output thereof is given to the input of AND gate 13.

The AND gate 13 receives the output from the inversion gate 9d and the OR gates, 11a to 11c, and outputs a prefetch request signal.

The control resistor 7 is a resistor for containing assigning information consisting of three bits for assigning the prefetch algorithm of the instruction buffer 1. The assigning information are set in the control resistor 7 by machine language instructions. Of these set assigning information consisting of three bits, the assigning information corresponding to the 0 bit is given to the other input of the OR gate 11c. The assigning information corresponding to the 1 bit is given to the other input of the OR gate 11b. Further, the assigning information corresponding to the 2 bit is given to the other input of the OR gate 11a.

In such construction, when assigning information assigned by "111" is set in the control resistor 7, each of the output from the OR gates, 11a to 11c, becomes on the "I" level irrespective of each the values of the F/F, 3a to 3c. Thus, the prefetch request signal which is the output of the AND gate 13 becomes a value obtained by inverting the value of the F F 3d. That is, the prefetch request signal is generated in the same manner as described in Fig. 1, and when the buffer resistor 1d is in the empty state, the prefetch is requested. Thus, instructions are prefetched, and then the prefetched instructions are held in the buffer resistor 1d. Accordingly, in the case of the assigning information of "111", the apparent capacity of the instruction buffer 1 is 16 bytes as shown in Fig. 3.

While, when the assigning information which is set in the control resistor 7 is "110", output of the OR gates 11a, 11b respectively become "I", and output of the OR gates 11c becomes a value obtained by inverting the value of the F/F 3c. Thus, the prefetch request signal becomes on "I" level when the values of the F/F 3c, 3d are "0" together, and then the prefetch is requested.

In this case, the state that the values of the F/F 3c, 3d are "0" means that the buffer resistors 1c, 1d are in the empty state together. That is, the prefetch is not requested until the buffer resistors 1c, 1d are in the empty state together. That is, the prefetch is not requested until the buffer resistors 1c, 1d are in the empty state together. Accordingly, instructions are prefetched, and then the prefetched instructions are held in the buffer resistor 1c. As the result, in case of the assigning information of "110", the buffer resistor 1d is always in the empty state, and does not hold the prefetched instructions, thus the apparent capacity of the instruction buffer 1 is 12 bytes as shown in Fig. 3.

Next, in case that the assigning information of "100" is set in the control resistor 7, the prefetch request becomes on "I" level when all the F/F 3b, 3c, 3d are "0", and then the prefetch is requested. That is, when all the buffer resistors 1b, 1c, 1d are in the empty state, instructions are prefetched, and then the prefetched instructions are held in the buffer resistor 1b. Accordingly, in case of the assigning information of "100", the buffer resistors 1c, 1d are always in the empty state, and do not hold the prefetched information, thus the apparent capacity of the instruction buffer 1 is 8 bytes as shown in Fig. 3.

Next, when the assigning information which is set in the control resistor 7 is "000", the prefetch request signal becomes on the "I" level when all the values of the F/F, 3a to 3d, are "0", and then the prefetch is requested. That is, when all the buffer resistors, 1a to 1d, in the instruction buffer I are in the empty state, instructions are prefetched, and then the prefetched instructions are held in the buffer resistor 1a. Accordingly, in the case of the assigning information of "000", all the buffer resistors 1b, 1c, 1d are in the empty state and do not hold the prefetched instructions, thus the apparent capacity of the instruction buffer 1 becomes 4 bytes as shown in Fig.3.

As stated above, by changing the prefetch algorithm in the instruction buffer 1 in accordance with the assigning information, the apparent capacity of the instruction buffer 1 can be changed. By this method, for example, when a program comprising many branch instructions is intended to be run, an amount of instructions to be prefetched can be reduced by reducing the apparent capacity of the instruction buffer 1. As the result, prefetch of instructions to be reactive prior to run can be reduced, and the lowering of the performance can be avoided. Thus, the capacity of the instruction buffer 1 can be set for an optimum value in accordance with the content of a program to be run. It should be understood that the present invention is not limited in the above embodiment. For example, in the above embodiment, the assigning information are set in the control resistor 7 by machine language instructions, but it is possible that a control terminal is provided in place of the control resistor 7 and the assigning information are given from an outside through the control terminal. Moreover, the assigning information may be given by a learning function based on a previous state of the instruction buffer 1. The number of the buffer resistors included in the instruction buffer 1 may be any given number so far as it is plural. For example, when it is two, the control resistor has only to contain information corresponding to one bit.

As stated above, according to the present invention, an apparent capacity of an instruction buffer for holding instructions to be prefetched can be changed, so that an amount of the instructions to be prefetched and held can be optimized corresponding to a content of a program to be run. Thus, it becomes possible to prefetch instructions efficiently, and the performance can be improved. Various modifications will become possible for those skilled in the art after receiving the teachings of the present disclosure without departing from the scope thereof.

## Claims

1. An information processing apparatus, comprising:

(a) an instruction buffer for storing a plurality of instructions;

(b) storage means for storing an occupation state of active instructions in the instruction buffer;

(c) a control resistor for setting changeably a storage capacity required for the instruction buffer; and

(d) read request means connected to the storage means and the control resistor for generating a signal for requesting a writing of next instructions into the instruction buffer when an amount of the active instructions stored in the instruction buffer is less than the storage capacity which is set in the control resistor.

2. The information processing apparatus according to claim 1, wherein the instruction buffer is an FIFO resistor group comprising a plurality of buffer resistors for storing one instruction respectively.

3. The information processing apparatus according to claim 2, wherein the storage means are flip-flops which are provided corresponding to the respective buffer resistors.

4. The information processing apparatus according to claim 3, wherein the control resistor is a resistor of one of a bit and of plural bits, and stores the number of the buffer resistors corresponding to the difference between a set capacity and a real capacity of the instruction buffer in the form of 0 bit or one bit.

5. The information processing apparatus according to claim 4, wherein the read request means comprises a plurality of OR gates whose input terminals are respectively connected to the flip-flops, excepting one flip-flop, and a component bit of the control resistor; and an AND gate whose input terminals are respectively connected to the output terminals of the OR gates and the one flip flop.

6. An information processing apparatus, comprising:

(a) holding means for temporally holding a plurality of instructions which are prefetched;

(b) state indicated means for indicating a holding state of the instructions in the holding means by indicating if the instructions held by the holding means are active or reactive;

(c) assigning means for assigning a capacity by which the holding means can hold instructions corresponding to a content of a program to be processed; and

(d) requesting means for requesting instruction prefetch when an amount of active instructions held in the holding means and indicated by the state indicating means is less than the capacity assigned by the assigning means.

7. The information processing apparatus according to claim 6, wherein the assigning means assigns the capacity of the holding means in accordance with an instruction.

8. The information processing apparatus according to claim 6, wherein the assigning means assigns the capacity of the holding means from an outside.

9. The information processing apparatus according to claim 6, wherein the assigning means assigns the capacity of the holding means in accordance with a previous holding state of the holding means.

# FIG.1

IUSTRACTION
BUFFER 1
IFU
5
3
PREFETCH
REQUEST
SIGNAL (IFU)
6
V3
3d
V2
3c
V1
3b
V0
3a
BUFFER RESISTOR
IB 3
1d
BUFFER RESISTOR
IB 2
1c
BUFFER RESISTOR
IB 1
1b
BUFFER RESISTOR
IB 0
1a
DUC

FIG.2
IUSTRACTION BUFFER 1
GENERATING CIRCUIT 5
IFU
3
V3
V2
V1
V0
3d
3c
3b
3a
9d
9c
9b
9a
BUFFER RESISTOR IB 3
1d
BUFFER RESISTOR IB 2
1c
BUFFER RESISTOR IB 1
1b
BUFFER RESISTOR IB 0
1a
PREFETCH REQUEST SIGNAL (IFU)
13
11c
11b
11a
DUC
CONTROL RESISTOR 7

# FIG.3

| CONTROL RESISTOR | PREFETCH REQUEST | APPARENT CAPACITY OF IUSTRUCTION BUFFER |
|---|---|---|
| 111 | IB3 IS EMPTY ($V3=0$) | 16 BYTES |
| 110 | IB2,IB3 ARE EMPTY ($V3+V2=0$) | 12 BYTES |
| 100 | IB1,IB2,IB3 ARE EMPTY ($V3+V2+V1=0$) | 8 BYTES |
| 000 | IB0,IB1,IB2,IB3 ARE EMPTY ($V3+V2+V1+V0=0$) | 4 BYTES |